# EUROPEAN PATENT APPLICATION

(11) **EP 4 797 029 A1**
(43) Date of publication of application: **26.08.2026**
(21) Application number: 24878820.0
(22) Date of filing: 26.09.2024
(51) Int. Cl.: G05D 1/43, A47L 11/40

(54) **METHOD AND APPARATUS FOR CALIBRATING SELF-MOVING ROBOT, AND DEVICE AND MEDIUM**

(30) Priority: 16.10.2023 CN 202311340695
(71) Applicant: Beijing Roborock Innovation Technology Co., Ltd., Beijing 102206 (CN)
(72) Inventor: ZHANG, Lei, Beijing 102206 (CN); ZHU, Hai, Beijing 102206 (CN); SUN, Wenxiu, Beijing 102206 (CN)
(74) Representative: advotec.
(86) International application number: PCT/CN2024/121272
(87) International publication number: WO 2025/082173

(57) **Abstract**

The present disclosure relates to a method and apparatus for calibrating a self-moving robot, and a self-moving robot and a medium. The method comprises: detecting whether a self-moving robot is traveling in a flat region; in response to the self-moving robot traveling in a flat region, performing supplementary calibration on external parameters of a horizontal line laser module of the self-moving robot, so as to obtain a supplementary calibration result; and on the basis of the supplementary calibration result, calculating position information of an obstacle during the travelling of the self-moving robot.

## Description

The present disclosure claims priority to Patent Application No. CN202311340695.3, filed on October 16, 2023 and entitled "CALIBRATION METHOD AND APPARATUS FOR SELF-PROPELLED ROBOT, DEVICE, AND MEDIUM".

### TECHNICAL FIELD

The present disclosure relates to the field of self-propelled robot control technologies, and in particular, to a calibration method and apparatus for a self-propelled robot, a device, and a medium.

### BACKGROUND ART

A self-propelled robot may include many sensors, including a camera assembly, a gyroscope, an accelerometer, a horizontal line laser assembly, and the like. The parameters describing the sensors include intrinsic parameters and extrinsic parameters. The intrinsic parameters are design process parameters of the sensors themselves, and the extrinsic parameters are posture relationships between the sensors, including a rotation relationship and a displacement relationship. The accuracy of the intrinsic parameters and the extrinsic parameters is a key factor affecting the algorithm performance of the robot. When each self-propelled robot leaves the factory, the intrinsic and extrinsic parameter data of the sensors of the robot will be calibrated. After leaving the factory, the self-propelled robot performs positioning calculation and the like in a subsequent use process according to the calibrated intrinsic and extrinsic parameter data.

However, after the factory setting of the intrinsic and extrinsic parameter data, since the internal components of the self-propelled robot, including the sensors, may slightly change in position and the like in the process of transportation and the like, the extrinsic parameters of the internal sensors of the self-propelled robot may change. In this way, during use by a user, if the self-propelled robot still positions an obstacle according to the extrinsic parameter data calibrated at the factory, problems, such as inaccurate positioning, will occur.

It should be noted that the information disclosed in the above background section is only provided for the enhancement of understanding of the background of the present disclosure, and may include information that does not constitute the prior art known to those of ordinary skill in the art.

### SUMMARY OF THE INVENTION

An objective of the present disclosure is to provide a calibration method and apparatus for a self-propelled robot, a self-propelled robot, and a computer-readable storage medium, so as to realize accurate positioning of an obstacle during use of the self-propelled robot.

According to a first aspect of the embodiments of the present disclosure, a calibration method for a self-propelled robot is provided. The method includes:
detecting whether the self-propelled robot travels in a flat region;
performing, in response to the self-propelled robot traveling in a flat region, supplementary calibration on an extrinsic parameter of a horizontal line laser assembly of the self-propelled robot to obtain a supplementary calibration result; and
correcting, based on the supplementary calibration result, ranging information of the self-propelled robot during traveling.

In one embodiment, optionally, detecting whether the self-propelled robot travels in a flat region includes:
acquiring angular velocity information in a vertical direction of the self-propelled robot by using a first sensor;
acquiring acceleration information of the self-propelled robot by using a second sensor; and
determining, based on the angular velocity information and the acceleration information, whether the self-propelled robot travels in a flat region.

In one embodiment, optionally, determining, based on the angular velocity information and the acceleration information, whether the self-propelled robot travels in a flat region includes:
determining, in response to the angular velocity information being less than or equal to a preset angular velocity and the acceleration information being less than or equal to a preset acceleration, that the self-propelled robot travels in a flat region.

In one embodiment, optionally, performing supplementary calibration on the extrinsic parameter of the horizontal line laser assembly of the self-propelled robot to obtain the supplementary calibration result includes:
acquiring an imaging result of a horizontal line laser of the self-propelled robot on a camera assembly and initial extrinsic parameter calibration data; and
performing, based on the imaging result and the initial extrinsic parameter calibration data, supplementary calibration on the extrinsic parameter of the horizontal line laser assembly to calibrate a change in a corresponding angle parameter, where the angle parameter includes any one or any combination of a pitch angle, a roll angle, and a yaw angle.

In one embodiment, optionally, detecting whether the self-propelled robot travels in a flat region includes:
acquiring an image collected by the horizontal line laser assembly;
analyzing change data of a light stripe position of a horizontal line laser in the image; and
determining, in response to the change data being less than or equal to a preset threshold, that the self-propelled robot travels in a flat region.

In one embodiment, optionally, detecting whether the self-propelled robot travels in a flat region includes:
acquiring altimetry change amplitude data of a ground point cloud collected by the horizontal line laser assembly; and
determining, in response to the altimetry change amplitude data being less than or equal to a preset amplitude value, that the self-propelled robot travels in a flat region.

In one embodiment, optionally, performing supplementary calibration on the extrinsic parameter of the horizontal line laser assembly of the self-propelled robot to obtain the supplementary calibration result includes:
acquiring a three-dimensional spatial position of a ground point cloud collected by the horizontal line laser assembly; and
performing, based on the three-dimensional spatial position and the initial extrinsic parameter calibration data, supplementary calibration on the extrinsic parameter of the horizontal line laser assembly to calibrate a change in a corresponding angle parameter, where the angle parameter includes any one or any combination of a pitch angle, a roll angle, and a yaw angle.

In one embodiment, optionally, correcting, based on the supplementary calibration result, the ranging information of the self-propelled robot during traveling includes:
performing, in response to the change in the angle parameter being greater than or equal to a preset change value, compensation calculation on the initial extrinsic parameter calibration data by using the change in the angle parameter, to obtain compensated extrinsic parameter calibration data; and
correcting, based on the compensated extrinsic parameter calibration data, the ranging information of the self-propelled robot during traveling.

According to a second aspect of the embodiments of the present disclosure, a calibration apparatus for a self-propelled robot is provided. The apparatus includes:
a detection module, configured to detect whether the self-propelled robot travels in a flat region;
a calibration module, configured to perform, in response to the self-propelled robot traveling in a flat region, supplementary calibration on an extrinsic parameter of a horizontal line laser assembly of the self-propelled robot to obtain a supplementary calibration result; and
a correction module, configured to correct, based on the supplementary calibration result, ranging information of the self-propelled robot during traveling.

According to a third aspect of the embodiments of the present disclosure, a self-propelled robot is provided. The self-propelled robot includes at least one processor; and a memory in communication connection with the at least one processor,
where the memory stores instructions executable by the at least one processor, and the instructions are configured for performing the method according to any one of the embodiments of the first aspect.

According to a fourth aspect of the embodiments of the present disclosure, a computer-readable storage medium having computer instructions stored thereon is provided. The instructions, when executed by a processor, implement the steps of the method according to any one of the embodiments of the first aspect.

The technical solutions provided in the embodiments of the present disclosure may include the following beneficial effects.

In the present disclosure, when the self-propelled robot travels in a flat region, supplementary calibration may be performed on an extrinsic parameter of a horizontal line laser assembly of the self-propelled robot, and then position information of an obstacle during traveling is calculated based on the supplementary calibration result. In this way, the accuracy of obstacle positioning can be ensured through the supplementary calibration of the extrinsic parameter of the horizontal line laser assembly.

It should be understood that both the foregoing general description and the following detailed description are exemplary and explanatory only and are not construed as limiting the present disclosure.

### BRIEF DESCRIPTION OF THE DRAWINGS

The drawings, which are incorporated into and constitute a part of the description, illustrate embodiments consistent with the present disclosure and, together with the description, are provided to explain the principles of the present disclosure. Apparently, the drawings in the following description are merely some embodiments of the present disclosure, and those of ordinary skill in the art may still derive other drawings from these drawings without creative efforts.
FIG. 1 is a schematic structural diagram of a self-propelled robot according to an exemplary embodiment.
FIG. 2 is a flowchart of a calibration method for a self-propelled robot according to an exemplary embodiment.
FIG. 3 is a flowchart of step S201 in a calibration method for a self-propelled robot according to an exemplary embodiment.
FIG. 4 is a flowchart of step S201 in another calibration method for a self-propelled robot according to an exemplary embodiment.
FIG. 5 is a flowchart of step S201 in yet another calibration method for a self-propelled robot according to an exemplary embodiment.
FIG. 6 is a flowchart of step S202 in a calibration method for a self-propelled robot according to an exemplary embodiment.
FIG. 7 is a flowchart of step S202 in another calibration method for a self-propelled robot according to an exemplary embodiment.
FIG. 8 is a flowchart of step S203 in another calibration method for a self-propelled robot according to an exemplary embodiment.
FIG. 9 is a block diagram of a calibration apparatus for a self-propelled robot according to an exemplary embodiment.

### DETAILED DESCRIPTION

Exemplary embodiments will now be described more comprehensively with reference to the drawings. However, the exemplary embodiments may be implemented in various forms, and should not be understood as being limited to the examples described herein. On the contrary, these embodiments are provided to make the present disclosure more comprehensive and complete, and comprehensively convey the idea of the exemplary embodiments to a person skilled in the art. The described features, structures, or characteristics may be combined in one or more embodiments in any suitable manner. In the following description, many specific details are provided to give a full understanding of the embodiments of the present disclosure. However, those skilled in the art will recognize that the technical solutions of the present disclosure may be practiced without one or more of the specific details, or other methods, components, apparatuses, steps, or the like may be employed. In other instances, well-known technical solutions are not shown or described in detail to avoid obscuring aspects of the present disclosure.

In addition, the drawings are only schematic illustrations of the present disclosure and are not necessarily drawn to scale. The same reference numerals in the drawings indicate the same or similar parts, and thus, repeated description thereof will be omitted. Some of the block diagrams shown in the drawings are functional entities, which are not necessarily required to correspond to physically or logically independent entities. These functional entities may be implemented in the form of software, or in one or more hardware modules or integrated circuits, or across different networks and/or processor apparatuses and/or microcontroller apparatuses.

One embodiment of the present disclosure provides a possible application scenario, which includes a self-propelled robot 100, such as a sweeping robot, a mopping robot, a vacuum cleaner, or a weeder. In some embodiments. In this embodiment, as shown inFIG. 1, a household sweeping robot is used as an example for description. During the operation of the sweeping robot, the sweeping robot may perform cleaning according to a preset route or an automatically planned route, but may inevitably get stuck in some places and be unable to proceed, for example, at a chair or a table. In this case, the sweeping robot may recognize the obstacle via a cloud server, a local server, or its own storage system, and mark the position as an obstacle position, which will be automatically avoided when the sweeping robot travels to the position next time. In this embodiment, the robot may be provided with a touch-sensitive display or controlled by a mobile terminal to receive an operation instruction input by a user. The self-propelled robot may be provided with various sensors, such as a buffer, a cliff sensor, an ultrasonic sensor, an infrared sensor, a magnetometer, an accelerometer, a gyroscope, an odometer, and other sensing apparatuses (the specific structure of each sensor is not described in detail, and any one of the above sensors may be used in the self-propelled device). The robot may be further provided with a wireless communication module, such as a WIFI module and a Bluetooth module, to be connected to a smart terminal or a server, and receive, via the wireless communication module, an operation instruction transmitted from the smart terminal or the server.

Optional embodiments of the present disclosure provide a line laser assembly, and other optional embodiments of the present disclosure provide a self-propelled robot. The line laser assembly is applied to the self-propelled robot. Specifically, the self-propelled robot is a smart cleaning device, such as a sweeping robot, a mopping robot, a floor polishing robot, or a weeding robot.

In one optional embodiment of the present disclosure, the self-propelled robot may include: a device main body, a sensing system, a control system, a driving system, a cleaning system, a power system, a human-machine interaction system, and the like. The systems cooperate with each other, such that the self-propelled robot can move autonomously to implement a cleaning function. In the self-propelled robot, functional elements and the like constituting the above systems are integrally arranged in the device main body.

The device main body is provided with an approximately circular shape (both front and rear are circular), or may be provided with other shapes, including but not limited to an approximate D-shape with a square front and a circular rear. The sensing system includes a line laser assembly located above or lateral to the device main body. A main control unit of the control system is connected to the line laser assembly, and performs function control on the self-propelled robot based on a sensing result of the line laser assembly.

In the embodiments of the present disclosure, the specific position of the line laser assembly on the device main body is not limited. For example, the position may be at, without limitation, the front side, the rear side, the left side, the right side, the top, the middle, the bottom, or the like of the device main body. Further, the line laser assembly is arranged at a middle position, a top position, or a bottom position in the height direction of the device main body.

In some implementable embodiments of the present disclosure, the self-propelled robot moves forward to perform an operation task. In order to better detect the environmental information in front, the line laser assembly is arranged on the front side of the device main body. The front side is the side that the device main body faces during the forward movement of the self-propelled robot.

The control system is arranged on a main circuit board in the machine body, and includes a computing processor, such as a central processing unit or an application processor, that communicates with a non-transitory memory, such as a hard disk, a flash memory, or a random access memory. The application processor draws, based on obstacle information fed back by a laser ranging apparatus, a real-time map of an environment in which the robot is located by using a positioning algorithm, such as simultaneous localization and mapping (SLAM, short for simultaneous localization and mapping). In addition, in combination with distance information and speed information that are fed back by sensing apparatuses, such as the sensor provided on the buffer, the cliff sensor, the magnetometer, the accelerometer, the gyroscope, and the odometer, the current working state and position of the sweeper, as well as the current pose of the sweeper, such as negotiating a doorsill, getting onto a carpet, being located at a cliff, being stuck from above or below, having a full dust box, or being picked up, are comprehensively determined. In addition, a specific strategy for the next action is given for different cases, such that the operation of the robot can better meet the requirements of the owner, achieving a better user experience.

The driving system may steer the robot to run across the ground based on driving commands with distance and angle information (e.g., x, y, and θ components). The driving system includes a driving wheel module, and the driving wheel module may simultaneously control a left wheel and a right wheel. In order to control the movement of the machine more accurately, the driving wheel module preferably includes a left driving wheel module and a right driving wheel module, separately. The left and right driving wheel modules are opposed along a lateral axis defined by the main body. In order for the robot to move more stably on the ground or have a stronger movement ability, the robot may include one or more driven wheels, including but not limited to universal wheels. The driving wheel module includes a traveling wheel, a drive motor, and a control circuit for controlling the drive motor. The driving wheel module may be further connected to a circuit for measuring a drive current and an odometer. The driving wheel module may be detachably connected to the main body to facilitate disassembly and maintenance. The driving wheel may be provided with a biased drop suspension system that is movably secured, e.g., rotatably attached, to the robot main body, and receives a spring bias that is biased downward and away from the robot main body. The spring bias allows the driving wheel to maintain contact and traction with the ground with a certain ground grip, while a cleaning element of the self-propelled robot 100 is also in contact with the ground with a certain pressure.

The cleaning system may be a dry cleaning system and/or a wet cleaning system. In the dry cleaning system, the main cleaning function is derived from a cleaning and sweeping system composed of a roller brush, a dust box, a fan, an air outlet, and connecting components among the four. The roller brush, with certain interference with the ground, sweeps up garbage on the ground and rolls up the garbage to the front of a dust suction inlet between the roller brush and the dust box, and then the garbage is sucked into the dust box by air having a suction force, which is generated by the fan and passes through the dust box. The dry cleaning system may further include a side brush 152 with a rotation shaft. The rotation shaft is angled relative to the ground to move debris into the roller brush region of the cleaning system.

The power system includes a rechargeable battery, for example, a nickel-hydrogen battery and a lithium battery. The rechargeable battery may be connected to a charging control circuit, a battery pack charging temperature detection circuit, and a battery undervoltage monitoring circuit. The charging control circuit, the battery pack charging temperature detection circuit, and the battery undervoltage monitoring circuit are then connected to a single-chip microcomputer control circuit. The main unit is charged by connection to a charging pile via charging electrodes arranged on the side or bottom of the machine body. If dust is attached to the exposed charging electrode, the plastic body around the electrode will melt and deform due to the accumulation effect of charge during charging, and even the electrode itself may deform, such that normal charging cannot be continued.

The human-machine interaction system includes buttons on a main unit panel for a user to select a function, and may further include a display screen and/or an indicator light and/or a speaker, where the display screen, the indicator light, and the speaker show a current state of the machine or function options to the user. The system may further include a mobile phone client program. For a path-navigation-type self-propelled robot, a mobile phone client can display to the user a map of an environment in which the device is located and the position of the machine, providing the user with richer and more user-friendly function options.

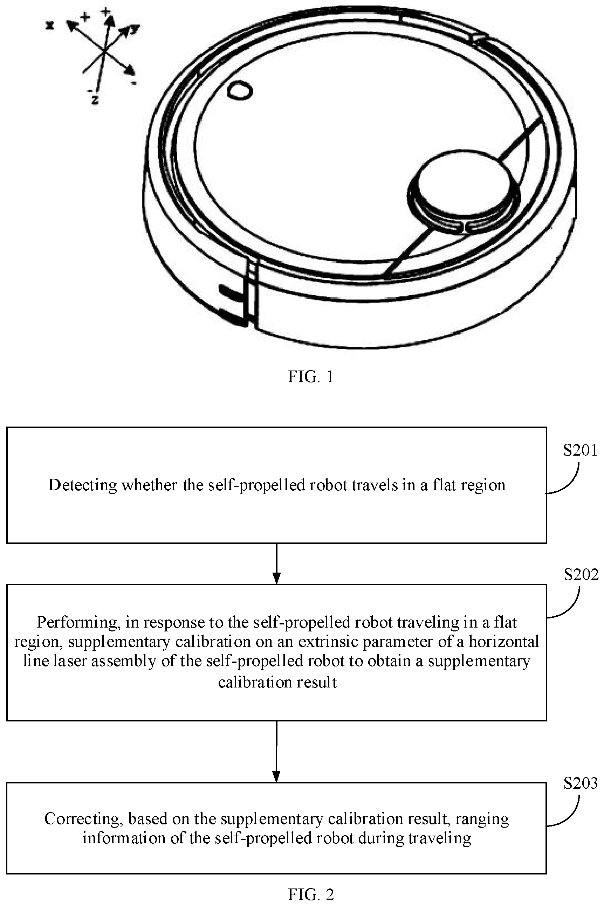

FIG. 2 is a flowchart of a calibration method for a self-propelled robot according to an exemplary embodiment.

As shown in FIG. 2, the calibration method for a self-propelled robot includes the following steps.

In step S201, it is detected whether the self-propelled robot travels in a flat region.

Specifically, whether the self-propelled robot travels in a flat region may be detected in various ways, which will be described in detail below.

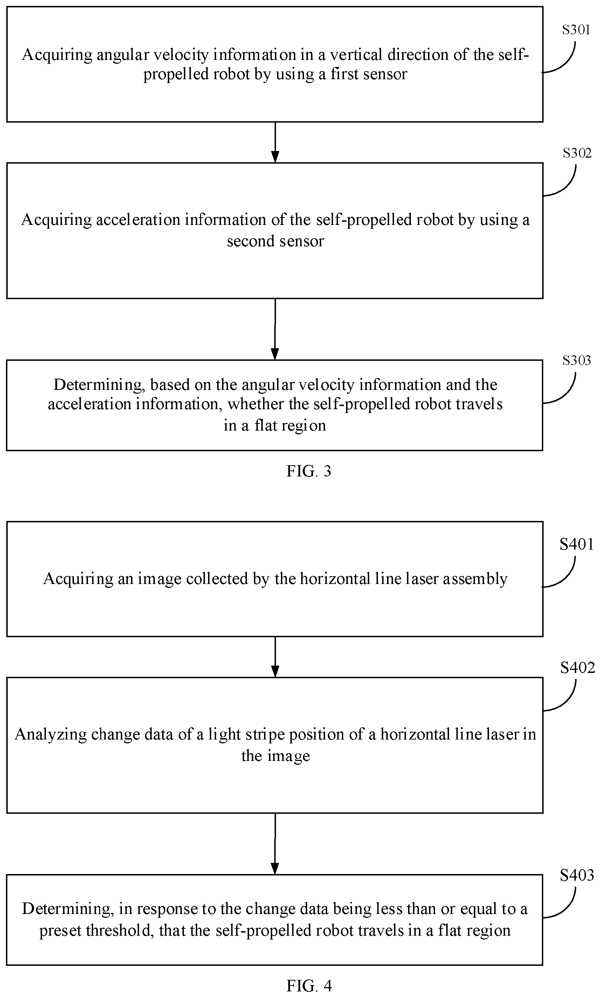

As shown in FIG. 3, in one embodiment, optionally, step S201 includes the following steps.

In step S301, angular velocity information in a vertical direction of the self-propelled robot is acquired by using a first sensor.

The first sensor may be a gyroscope, and the angular velocity information in the vertical direction of the self-propelled robot is calculated by the gyroscope.

In step S302, acceleration information of the self-propelled robot is acquired by using a second sensor.

The second sensor may be an acceleration sensor, and the acceleration information of the self-propelled robot is calculated by the acceleration sensor.

In step S303, whether the self-propelled robot travels in a flat region is determined based on the angular velocity information and the acceleration information.

Specifically, it is determined, in response to the angular velocity information being less than or equal to a preset angular velocity and the acceleration information being less than or equal to a preset acceleration, that the self-propelled robot travels in a flat region.

In this embodiment, whether the self-propelled robot travels in a flat region may be determined based on the angular velocity information in the vertical direction and the acceleration information of the self-propelled robot. If the angular velocity is less than or equal to the preset angular velocity and the acceleration is also less than or equal to the preset acceleration, it can be determined that the self-propelled robot travels in a flat region. That is, if both the angular velocity and the acceleration are small, it is determined that the self-propelled robot travels in a flat region. On the contrary, if the angular velocity is greater than the preset angular velocity or the acceleration is greater than the preset acceleration, it indicates that the region where the self-propelled robot travels is not flat, and in this case, no supplementary calibration of extrinsic parameters is performed.

As shown in FIG. 4, in another embodiment, optionally, step S201 includes the following steps.

In step S401, an image collected by a horizontal line laser assembly is acquired.

In step S402, change data of a light stripe position of a horizontal line laser in the image is analyzed.

In step S403, in response to the change data being less than or equal to a preset threshold, it is determined that the self-propelled robot travels in a flat region.

In this embodiment, the self-propelled robot may evaluate, by using the image captured by a horizontal line laser ranging assembly, whether a local region in which the machine is operating is flat. Specifically, when the change data, through analysis, of the light stripe position of the horizontal line laser in the image is less than or equal to the preset threshold, it is determined that the local region in which the self-propelled robot is operating is flat.

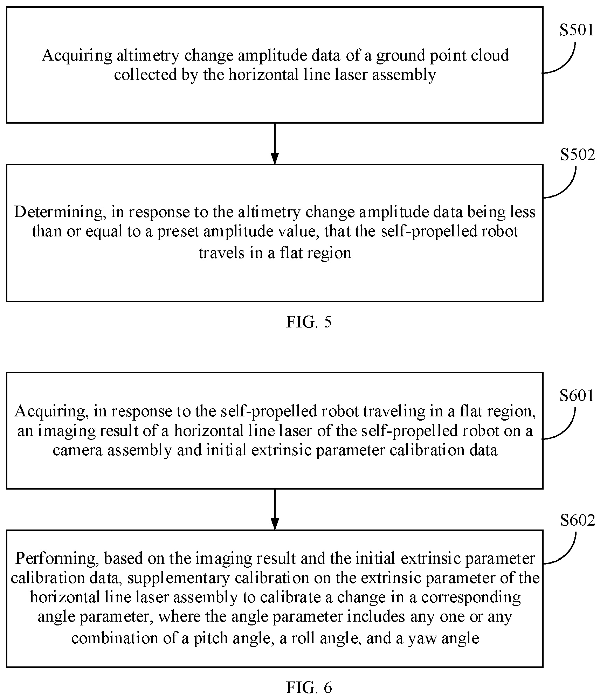

As shown in FIG. 5, in one embodiment, optionally, step S201 includes the following steps.

In step S501, altimetry change amplitude data of a ground point cloud collected by the horizontal line laser assembly is acquired.

The ground point cloud data collected when the horizontal line laser assembly performs ranging can be acquired, and the altimetry change amplitude data can be analyzed based on the ground point cloud data.

In step S502, in response to the altimetry change amplitude data being less than or equal to a preset amplitude value, it is determined that the self-propelled robot travels in a flat region.

If the altimetry change amplitude data of the ground point cloud is less than or equal to the preset amplitude value, it is determined that the local region in which the self-propelled robot is operating is flat.

It should be noted that those skilled in the art should understand that in the present disclosure, the methods for determining whether the self-propelled robot travels in a flat region include, but are not limited to, the above three, and may also include other implementable methods.

In step S202, in response to the self-propelled robot traveling in a flat region, supplementary calibration is performed on an extrinsic parameter of the horizontal line laser assembly of the self-propelled robot to obtain a supplementary calibration result.

In step S203, ranging information of the self-propelled robot during traveling is corrected based on the supplementary calibration result.

In this embodiment, when the self-propelled robot travels in a flat region, supplementary calibration may be performed on the extrinsic parameter of the horizontal line laser assembly of the self-propelled robot, and then the ranging information of the self-propelled robot during traveling is corrected based on the supplementary calibration result. In this way, the accuracy of the ranging information can be ensured through the supplementary calibration of the extrinsic parameter of the horizontal line laser assembly.

As shown in FIG. 6, in one embodiment, optionally, step S202 includes the following steps.

In step S601, in response to the self-propelled robot traveling in a flat region, an imaging result of a horizontal line laser of the self-propelled robot on a camera assembly and initial extrinsic parameter calibration data are acquired.

In step S602, based on the imaging result and the initial extrinsic parameter calibration data, supplementary calibration is performed on the extrinsic parameter of the horizontal line laser assembly to calibrate a change in a corresponding angle parameter, where the angle parameter includes any one or any combination of a pitch angle, a roll angle, and a yaw angle.

In this embodiment, when the machine travels in a flat region, the imaging result of the horizontal line laser on the camera and the existing extrinsic parameter calibration data are used to perform supplementary calibration on the extrinsic parameter of the horizontal line laser assembly, calibrating the pitch, roll, and yaw angle changes in the extrinsic parameter of the horizontal line laser assembly.

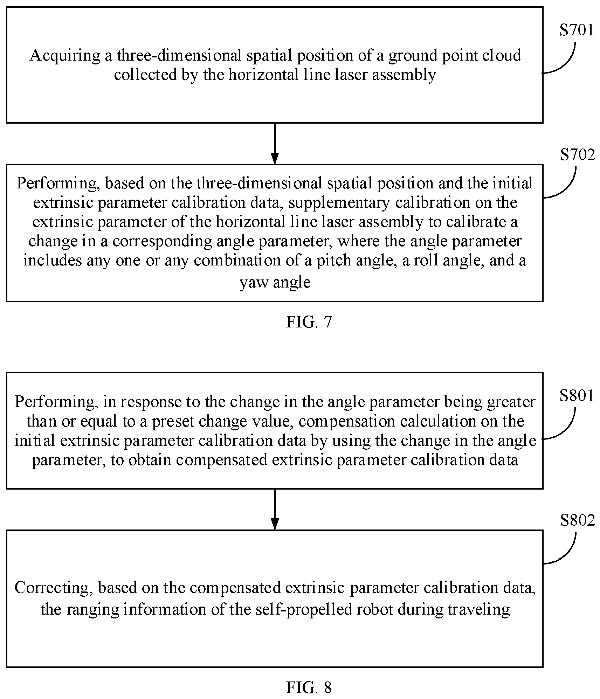

As shown in FIG. 7, in another embodiment, optionally, step S202 includes the following steps.

In step S701, a three-dimensional spatial position of a ground point cloud collected by the horizontal line laser assembly is acquired.

In step S702, based on the three-dimensional spatial position and the initial extrinsic parameter calibration data, supplementary calibration is performed on the extrinsic parameter of the horizontal line laser assembly to calibrate a change in a corresponding angle parameter, where the angle parameter includes any one or any combination of a pitch angle, a roll angle, and a yaw angle.

In this embodiment, when the self-propelled robot travels in a flat region, the three-dimensional spatial position of the ground point cloud measured when the horizontal line laser assembly travels in the flat region and the existing extrinsic parameter calibration data are used to perform supplementary calibration on the extrinsic parameter of the horizontal line laser assembly, calibrating the pitch, roll, and yaw angle changes in the extrinsic parameter of the horizontal line laser assembly.

As shown in FIG. 8, in one embodiment, optionally, step S203 includes the following steps.

In step S801, in response to the change in the angle parameter being greater than or equal to a preset change value, compensation calculation is performed on the initial extrinsic parameter calibration data by using the change in the angle parameter, to obtain compensated extrinsic parameter calibration data.

In step S802, the ranging information of the self-propelled robot during traveling is corrected based on the compensated extrinsic parameter calibration data.

In this embodiment, when the pitch, roll, and yaw angle changes in the extrinsic parameter subject to the supplementary calibration are greater than a certain threshold, the pitch, roll, and yaw in the extrinsic parameter subject to the supplementary calibration are compensated into the extrinsic parameter of the device when performing ranging calculation by using the line laser, to correct the ranging information of the self-propelled robot during traveling, thereby ensuring the accuracy of the ranging information.

In one embodiment, optionally, the method further includes:
saving the supplementary calibration result;
acquiring, when the self-propelled robot is detected to be in operation, the supplementary calibration result; and
correcting, based on the supplementary calibration result, ranging information of the self-propelled robot during traveling.

In this embodiment, after calculating the supplementary calibration result this time, the self-propelled robot may record the supplementary calibration result. In this way, the supplementary calibration result may be directly loaded for extrinsic parameter compensation during the next operation.

In one embodiment, optionally, the method further includes:
determining a current supplementary calibration result corresponding to a current operation of the self-propelled robot;
acquiring a stored supplementary calibration result; and
correcting, in response to a difference between the current supplementary calibration result and the stored supplementary calibration result being greater than or equal to a preset difference, the ranging information of the self-propelled robot during traveling by using the current supplementary calibration result.

In this embodiment, when the previous supplementary calibration result is used in a new operation, if the change between the supplementary calibration result newly obtained in a flat region in the current operation and the previously saved supplementary calibration result exceeds a certain threshold, the previously saved supplementary calibration result is stopped from being used in the current or next operation, or the current new supplementary calibration result is used.

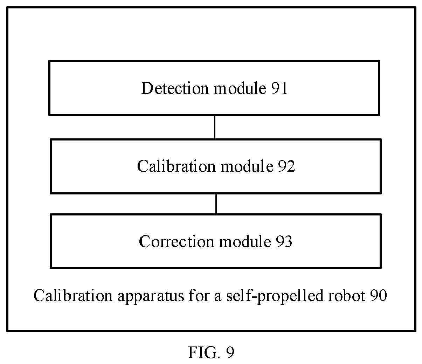

FIG. 9 is a block diagram of a calibration apparatus for a self-propelled robot according to an exemplary embodiment.

As shown in FIG. 9, according to a second aspect of the embodiments of the present disclosure, a calibration apparatus 90 for a self-propelled robot is provided. The apparatus includes:
a detection module 91, configured to detect whether the self-propelled robot travels in a flat region;
a calibration module 92, configured to perform, in response to the self-propelled robot traveling in a flat region, supplementary calibration on an extrinsic parameter of a horizontal line laser assembly of the self-propelled robot to obtain a supplementary calibration result; and
a correction module 93, configured to correct, based on the supplementary calibration result, ranging information of the self-propelled robot during traveling.

In one embodiment, optionally, the detection module 91 includes:
a first acquisition unit, configured to acquire angular velocity information in a vertical direction of the self-propelled robot by using a first sensor;
a second acquisition unit, configured to acquire acceleration information of the self-propelled robot by using a second sensor; and
a first determination unit, configured to determine, based on the angular velocity information and the acceleration information, whether the self-propelled robot travels in a flat region.

In one embodiment, optionally, the determination unit is configured to:
determine, in response to the angular velocity information being less than or equal to a preset angular velocity and the acceleration information being less than or equal to a preset acceleration, that the self-propelled robot travels in a flat region.

In one embodiment, optionally, the calibration module includes:
a third acquisition unit, configured to acquire an imaging result of a horizontal line laser of the self-propelled robot on a camera assembly and initial extrinsic parameter calibration data; and
a first calibration unit, configured to perform, based on the imaging result and the initial extrinsic parameter calibration data, supplementary calibration on the extrinsic parameter of the horizontal line laser assembly to calibrate a change in a corresponding angle parameter, where the angle parameter includes any one or any combination of a pitch angle, a roll angle, and a yaw angle.

In one embodiment, optionally, the detection module further includes:
a fourth acquisition unit, configured to acquire an image collected by the horizontal line laser assembly;
a data analysis unit, configured to analyze change data of a light stripe position of a horizontal line laser in the image; and
a second determination unit, configured to determine, in response to the change data being less than or equal to a preset threshold, that the self-propelled robot travels in a flat region.

In one embodiment, optionally, the detection module further includes:
a fifth acquisition unit, configured to acquire altimetry change amplitude data of a ground point cloud collected by the horizontal line laser assembly; and
a third determination unit, configured to determine, in response to the altimetry change amplitude data being less than or equal to a preset amplitude value, that the self-propelled robot travels in a flat region.

In one embodiment, optionally, the calibration module further includes:
a sixth acquisition unit, configured to acquire a three-dimensional spatial position of the ground point cloud collected by the horizontal line laser assembly; and
a second calibration unit, configured to perform, based on the three-dimensional spatial position and the initial extrinsic parameter calibration data, supplementary calibration on the extrinsic parameter of the horizontal line laser assembly to calibrate a change in a corresponding angle parameter, where the angle parameter includes any one or any combination of a pitch angle, a roll angle, and a yaw angle.

In one embodiment, optionally, the correction module includes:
a supplementary calculation unit, configured to perform, in response to the change in the angle parameter being greater than or equal to a preset change value, compensation calculation on the initial extrinsic parameter calibration data by using the change in the angle parameter, to obtain compensated extrinsic parameter calibration data; and
a position calculation unit, configured to correct, based on the compensated extrinsic parameter calibration data, the ranging information of the self-propelled robot during traveling.

In particular, according to the embodiments of the present disclosure, the processes described above with reference to the flowcharts may be implemented as a computer software program. For example, the embodiments of the present disclosure include a computer program product, which includes a computer program carried on a computer-readable medium. The computer program contains program code configured to perform the method shown in the flowcharts.

It should be noted that the computer-readable medium shown in the present disclosure may be a computer-readable signal medium, a computer-readable storage medium, or any combination thereof. The computer-readable storage medium may be, for example, but is not limited to, an electrical, magnetic, optical, electromagnetic, infrared, or semiconductor system, apparatus, or device, or any combination thereof. More specific examples of the computer-readable storage medium may include but are not limited to: an electrical connection with one or more wires, a portable computer disk, a hard disk, a random access memory (RAM), a read-only memory (ROM), an erasable programmable read-only memory (EPROM or flash memory), an optical fiber, a portable compact disc read-only memory (CD-ROM), an optical storage device, a magnetic storage device, or any suitable combination thereof. In the present disclosure, the computer-readable storage medium may be any tangible medium containing or storing a program for use by or in conjunction with an instruction execution system, apparatus, or device. Moreover, in the present disclosure, the computer-readable signal medium may include data signals propagated in baseband or as part of a carrier wave, carrying computer-readable program code. These propagated data signals may take various forms, including but not limited to electromagnetic signals, optical signals, or any suitable combination thereof. The computer-readable signal medium may also be any computer-readable medium other than the computer-readable storage medium, which sends, propagates, or transmits a program configured for use by or in conjunction with an instruction execution system, apparatus, or device. The program code contained on the computer-readable medium is transmitted using any suitable medium, including but not limited to a wireless medium, a wired medium, an optical cable, RF, or any suitable combination thereof.

The flowcharts and block diagrams in the drawings illustrate the architecture, functionality, and operations that may be implemented for the system, method, and computer program product according to various embodiments of the present disclosure. In this regard, each block in the flowchart or block diagram may represent a module, program segment, or a portion of code, which includes one or more executable instructions configured to implement specific logical functions. It should also be noted that in some alternate implementations, functions noted in the blocks may occur in different orders than noted in the drawings. For example, two blocks shown consecutively can actually execute in parallel, or sometimes, in the reverse order, depending on the functionality involved. Also, it should be noted that each block in the block diagram or flowchart, and the combination of blocks in the block diagram or flowchart, can be implemented using a specialized hardware-based system performing the specified functions or operations, or a combination of specialized hardware and computer instructions.

Units described in the embodiments of the present disclosure may be implemented by means of software, or may be implemented by means of hardware, and the units described may also be arranged in a processor. The names of these units do not, in some cases, constitute a limitation on the units themselves.

In another aspect, the present disclosure further provides a computer-readable medium. The computer-readable medium may be included in the electronic device described in the above embodiments, or may exist alone without being assembled into the electronic device. The computer-readable medium carries one or more programs which, when executed by the electronic device, cause the electronic device to implement the obstacle avoidance method for a self-propelled device based on a line laser as described in the above embodiments.

For example, the electronic device may implement the following steps as shown in FIG. 2: step S201, detecting whether the self-propelled robot travels in a flat region; step S202, performing, in response to the self-propelled robot traveling in a flat region, supplementary calibration on an extrinsic parameter of a horizontal line laser assembly of the self-propelled robot to obtain a supplementary calibration result; and step S203, correcting, based on the supplementary calibration result, ranging information of the self-propelled robot during traveling.

It should be noted that although several modules or units of the device configured to perform actions are mentioned in the above detailed description, such division is not mandatory. In practice, according to the embodiments of the present disclosure, the features and functions of two or more modules or units described above may be embodied in one module or unit. Conversely, the features and functions of one module or unit described above may be further divided and embodied by a plurality of modules or units.

In addition, although the steps of the method in the present disclosure are described in a specific order in the drawings, this does not require or imply that these steps are necessarily performed in this specific order, or that all of the steps shown are necessarily performed to achieve the desired results. Additionally or alternatively, some steps may be omitted, a plurality of steps may be combined into one step for execution, and/or one step may be divided into a plurality of steps for execution, among other variations.

Based on the description of the foregoing embodiments, a person skilled in the art can easily understand that the exemplary embodiments described herein may be implemented by software, or may be implemented by software in combination with necessary hardware. Therefore, the technical solutions according to the embodiments of the present disclosure may be embodied in the form of a software product. The software product may be stored in a non-volatile storage medium (which may be a CD-ROM, a USB flash drive, a mobile hard disk, or the like) or on a network, and includes several instructions that enable a computing device (which may be a personal computer, a server, a mobile terminal, a network device, or the like) to perform the method according to the embodiments of the present disclosure.

Other embodiments of the present disclosure are apparent to those skilled in the art from consideration of the specification and practice of the present disclosure disclosed herein. The present disclosure is intended to encompass any variation, use, or adaptation of the present disclosure following the general principles of the present disclosure and including known common knowledge or customary technical means in the art undisclosed in the present disclosure. The specification and embodiments are only considered exemplary, and the true scope and spirit of the present disclosure are indicated in the appended claims.

## Claims

1. A calibration method for a self-propelled robot, comprising:
detecting whether the self-propelled robot travels in a flat region;
performing, in response to the self-propelled robot traveling in a flat region, supplementary calibration on an extrinsic parameter of a horizontal line laser assembly of the self-propelled robot to obtain a supplementary calibration result; and
correcting, based on the supplementary calibration result, ranging information of the self-propelled robot during traveling.

2. The calibration method for a self-propelled robot according to claim 1, wherein detecting whether the self-propelled robot travels in a flat region comprises:
acquiring angular velocity information in a vertical direction of the self-propelled robot by using a first sensor;
acquiring acceleration information of the self-propelled robot by using a second sensor; and
determining, based on the angular velocity information and the acceleration information, whether the self-propelled robot travels in a flat region.

3. The calibration method for a self-propelled robot according to claim 2, wherein determining, based on the angular velocity information and the acceleration information, whether the self-propelled robot travels in a flat region comprises:
determining, in response to the angular velocity information being less than or equal to a preset angular velocity and the acceleration information being less than or equal to a preset acceleration, that the self-propelled robot travels in a flat region.

4. The calibration method for a self-propelled robot according to claim 2, wherein performing supplementary calibration on the extrinsic parameter of the horizontal line laser assembly of the self-propelled robot to obtain the supplementary calibration result comprises:
acquiring an imaging result of a horizontal line laser of the self-propelled robot on a camera assembly and initial extrinsic parameter calibration data; and
performing, based on the imaging result and the initial extrinsic parameter calibration data, supplementary calibration on the extrinsic parameter of the horizontal line laser assembly to calibrate a change in a corresponding angle parameter, wherein the angle parameter comprises any one or any combination of a pitch angle, a roll angle, and a yaw angle.

5. The calibration method for a self-propelled robot according to claim 1, wherein detecting whether the self-propelled robot travels in a flat region comprises:
acquiring an image collected by the horizontal line laser assembly;
analyzing change data of a light stripe position of a horizontal line laser in the image; and
determining, in response to the change data being less than or equal to a preset threshold, that the self-propelled robot travels in a flat region.

6. The calibration method for a self-propelled robot according to claim 1, wherein detecting whether the self-propelled robot travels in a flat region comprises:
acquiring altimetry change amplitude data of a ground point cloud collected by the horizontal line laser assembly; and
determining, in response to the altimetry change amplitude data being less than or equal to a preset amplitude value, that the self-propelled robot travels in a flat region.

7. The calibration method for a self-propelled robot according to claim 1, wherein performing supplementary calibration on the extrinsic parameter of the horizontal line laser assembly of the self-propelled robot to obtain the supplementary calibration result comprises:
acquiring a three-dimensional spatial position of a ground point cloud collected by the horizontal line laser assembly; and
performing, based on the three-dimensional spatial position and the initial extrinsic parameter calibration data, supplementary calibration on the extrinsic parameter of the horizontal line laser assembly to calibrate a change in a corresponding angle parameter, wherein the angle parameter comprises any one or any combination of a pitch angle, a roll angle, and a yaw angle.

8. The calibration method for a self-propelled robot according to claim 4 or 7, wherein correcting, based on the supplementary calibration result, the ranging information of the self-propelled robot during traveling comprises:
performing, in response to the change in the angle parameter being greater than or equal to a preset change value, compensation calculation on the initial extrinsic parameter calibration data by using the change in the angle parameter, to obtain compensated extrinsic parameter calibration data; and
correcting, based on the compensated extrinsic parameter calibration data, the ranging information of the self-propelled robot during traveling.

9. A calibration apparatus for a self-propelled robot, comprising:
a detection module, configured to detect whether the self-propelled robot travels in a flat region;
a calibration module, configured to perform, in response to the self-propelled robot traveling in a flat region, supplementary calibration on an extrinsic parameter of a horizontal line laser assembly of the self-propelled robot to obtain a supplementary calibration result; and
a correction module, configured to correct, based on the supplementary calibration result, ranging information of the self-propelled robot during traveling.

10. A self-propelled robot, comprising: at least one processor; and a memory in communication connection with the at least one processor,
wherein the memory stores instructions executable by the at least one processor, and the instructions are configured for performing the method according to any one of claims 1 to 8.

11. A computer-readable storage medium, wherein the computer-readable storage medium stores computer-executable instructions, and the computer-executable instructions are configured for performing a process of the method according to any one of claims 1 to 8.
